# FASCICULE DE BREVET EUROPEEN

(11) **EP 2 276 615 B1**
(45) Date de publication et mention de la délivrance du brevet: **24.10.2012**
(21) Numéro de dépôt: 09742288.5
(22) Date de dépôt: 09.04.2009
(51) Int. Cl.: B29C 33/56

(54) **MOULE ET PROCÉDÉ DE COMPRESSION POUR LE REVÊTEMENT D'UN ÉLÉMENT PAR UNE COUCHE DE REVÊTEMENT**
KOMPRESSIONSFORM UND VERFAHREN ZUR BESCHICHTUNG EINES ELEMENTS MIT EINER BESCHICHTUNGSSCHICHT
COMPRESSION MOULD AND METHOD FOR COATING A MEMBER WITH A COATING LAYER

(30) Priorité: 11.04.2008 FR 0852447
(43) Date de publication de la demande: 26.01.2011
(73) Titulaire: Faurecia Interieur Industrie, 92000 Nanterre (FR)
(72) Inventeur: DURAND, Nathalie, F-95800 Cergy (FR); PICCIN, Hugo, F-75019 Paris (FR)
(74) Mandataire: Blot, Philippe Robert Emile
(86) Numéro de dépôt international: PCT/FR2009/050637
(87) Numéro de publication internationale: WO 2009/136090

(56) Documents cités:
- DE-A1-102006 013 016
- GB-A- 1 050 562
- US-A- 5 925 304
- US-A1- 2007 063 378

## Description

La présente invention concerne un moule de compression de revêtement d'un élément rigide par une couche de revêtement, du type comprenant une partie mâle et une partie femelle comprenant chacune une surface de réception respectivement dudit élément et de la couche de revêtement, ladite surface présentant la forme dudit élément, une des parties étant déplaçable de sorte à appuyer contre l'élément et la couche de revêtement de sorte à solidariser ladite couche de revêtement audit élément

L'invention concerne également un procédé de revêtement d'un élément rigide par compression, utilisant un tel moule de compression.

De tels éléments rigides sont utilisés entre autre pour réaliser des éléments de garnissage, par exemple pour les véhicules automobiles, ou comme revêtements décoratifs dans un grand nombre d'applications.

De tels éléments rigides, par exemple des pièces comprenant des fibres naturelles, sont par exemple formés par compression au moyen d'un moule de compression ou par injection, ce qui permet de conférer à l'élément la forme tridimensionnelle souhaitée.

L'élément est ensuite revêtu par une couche de revêtement au moyen d'un moule de compression dans lequel l'élément tridimensionnel et une couche de revêtement sont placés et pressés l'un contre l'autre afin de solidariser la couche de revêtement à l'élément tridimensionnel. Le document US-5 925 304 décrit un tel moule de compression.

Cependant, certains éléments ne présentent pas une stabilité dimensionnelle suffisante pour que l'élément ne se déforme pas après sa réalisation par exemple par compression ou par injection. C'est notamment le cas pour des pièces comprenant des fibres naturelles.

Ainsi, la géométrie de l'élément n'est pas constante et l'élément peut se déformer, par exemple du fait de sa manipulation ou de variations climatiques. Lorsque l'élément est disposé dans le moule de compression pour effectuer son revêtement, il peut ne pas être ajusté de façon satisfaisante. Cette déformation est gênante lors du revêtement par compression et peut mener à un mauvais revêtement de l'élément et à une qualité non satisfaisante de l'élément final.

Pour pallier ces inconvénients, il est connu d'utiliser une fine couche de mousse sur l'envers du revêtement afin de combler les éventuelles instabilités dimensionnelles ; en effet la mousse sera plus ou moins écrasée selon les zones de déformations de l'élément et le revêtement sera toujours bien appliqué sur l'élément.

Une telle couche de mousse est employée dans la plupart les applications de revêtement de textiles sur un élément rigide par exemple pour créer des garnitures de portes de véhicule automobile.

Cependant, la couche de mousse confère à l'élément revêtu un toucher « souple » qui n'est pas forcément satisfaisant pour certaines applications, En effet, pour certaines de ces pièces, on souhaite obtenir un toucher « dur ».

L'un des buts de l'invention est de proposer une solution pour pallier ces inconvénients d'instabilité dimensionnelle en proposant un moule de compression permettant de se passer d'une couche de mousse et d'obtenir un revêtement satisfaisant dudit élément.

A cet effet, l'invention concerne un moule de compression du type précité, dans lequel un revêtement à base de résine est fixé à l'une des parties, ledit revêtement étant destiné à compenser l'instabilité géométrique de l'élément de sorte à appliquer une pression sensiblement uniforme sur ledit élément.

Selon d'autres caractéristiques du moule de compression :
- la partie mâle est déplaçable vers la partie femelle, le revêtement à base de résine étant fixé à ladite partie mâle ;
- le moule de compression comprend des moyens de chauffage d'au moins une des parties du moule de sorte à solidariser la couche de revêtement à l'élément par thermocompression ;
- le revêtement à base de résine présente une dureté sensiblement comprise entre 60 shore A et 100 shore A ;
- le revêtement à base de résine est un polymère à base de silicone ou de polyuréthane résistant à des températures supérieures ou égales à 30°C ;
- le revêtement à base de résine est résistant à des températures supérieures ou égales à 90°C ;
- le revêtement à base de résine présente une épaisseur sensiblement comprise entre 1 mm et 10 mm ; et
- la partie à laquelle est fixé le revêtement à base de résine comprend des moyens de formation d'un vide sur la surface de réception de ladite partie afin de retenir l'élément contre ladite partie.

L'invention concerne également un procédé de revêtement d'un élément rigide par compression, utilisant un moule de compression tel que décrit ci-dessus, ce procédé comprenant les étapes suivantes :
- disposer une couche de revêtement et l'élément, chacun sur une surface de réception du moule,
- déplacer la partie déplaçable du moule de sorte que le revêtement à base de résine appuie de façon uniforme contre l'élément et la couche de revêtement et l'autre partie et solidarise la couche de revêtement à l'élément,
- déplacer la partie déplaçable de sorte à l'écarter de l'autre partie et retirer l'élément ainsi revêtu.

Selon d'autres caractéristiques du procédé :
- la couche de revêtement est une couche à base d'un matériau lignocellulosique, un complexe lignocellulosique ou un revêtement comprenant une pluralité de couches à base de matériaux lignocellulosiques ; et
- l'élément à revêtir est une pièce à base de fibres naturelles.

D'autres aspects et avantages de l'invention apparaîtront à la lecture de la description qui suit, donnée à titre d'exemple et faite en référence au dessin annexé, dans lequel :

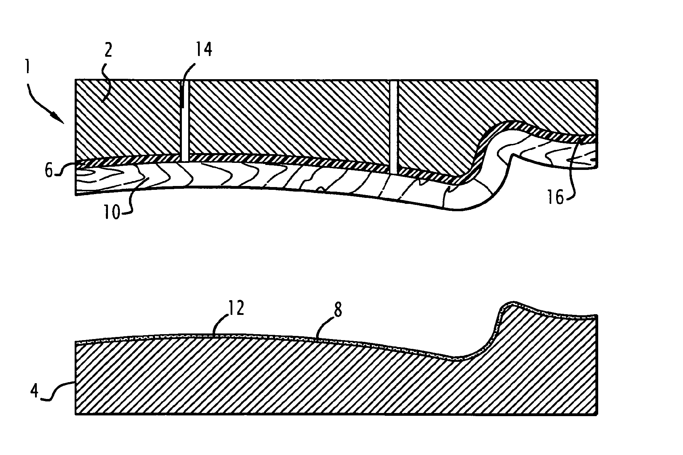

- la Fig. 1 est une représentation schématique en coupe d'un moule de compression selon l'invention, dans lequel un élément à revêtir et une couche de revêtement sont disposés.

En référence à la Fig. 1, on décrit un moule de compression 1 comprenant une partie mâle 2 et une partie femelle 4 comprenant chacune une surface de réception 6 et 8, respectivement d'un élément tridimensionnel 10 et d'une couche de revêtement 12.

Les surfaces de réception 6 et 8 présentent la forme tridimensionnelle de l'élément 10 et sont disposées l'une en regard de l'autre.

La partie mâle 2 est déplaçable vers la partie femelle afin de presser l'élément 10 et la couche de revêtement 12 l'un contre l'autre et les solidariser pour obtenir en sortie de moule un élément revêtu par la couche de revêtement 12.

La partie mâle 2 comprend des moyens 14 de formation de vide sur sa surface de réception 6 permettant de maintenir l'élément 10 contre cette surface. Ces moyens comprennent par exemple des canaux d'aspiration traversant la partie mâle 2 et permettant d'aspirer l'élément 10 contre la surface de réception 6.

La couche de revêtement 12 est maintenue contre la surface de réception 8 de la partie femelle par exemple par des moyens de fixation du type crochets, clips, etc. La couche de revêtement qui est souple est mise en forme par la surface de réception 8, c'est-à-dire qu'elle adopte la forme de cette surface de réception et donc celle de l'élément 10 à revêtir lorsqu'elle est disposée sur la surface de réception 8.

Selon un mode de réalisation, le moule comprend des moyens de chauffage (non représentés) d'au moins une des parties du moule de sorte à revêtir l'élément par thermocompression. Ces moyens de chauffage permettent généralement de chauffer la partie femelle 4 du moule dont la surface de réception est plus proche de la face de contact entre l'élément 10 et la couche de revêtement 12, afin de solidariser cet élément et cette couche par thermocompression. Les températures de chauffage de la partie femelle sont par exemple supérieures à 90°C, et notamment supérieure s à 130°C.

La partie mâle 2 du moule 1 comprend, sur sa surface de réception 6, un revêtement 16 à base de résine fixé sur la surface et contre lequel la face d'envers de l'élément 10 à revêtir est disposée lorsque l'élément 10 est placé dans le moule.

Un tel revêtement 16 permet de compenser l'instabilité géométrique de l'élément 10 et d'appliquer une pression uniforme sur l'ensemble de l'élément 10 lors de la compression. On évite ainsi un mauvais positionnement de la couche de revêtement 12 par rapport à l'élément 10 et on obtient un élément revêtu de manière satisfaisante, ce qui confère une bonne qualité à la pièce réalisée.

Le revêtement à base de résine 16 comprend par exemple une épaisseur sensiblement comprise entre 1 et 10 mm selon les tolérances calculées à chaque endroit de la surface de réception 6.

Le revêtement 16 présente par exemple une dureté sensiblement comprise entre 60 shore A et 100 shore A.

Pour un moule de compression classique, c'est-à-dire un moule effectuant une compression « à froid », le revêtement 16 est par exemple un polymère à base de silicone ou de polyuréthane résistant à des températures supérieures à 30°C, et de préférence supérieures à 40°C.

Pour un moule de compression permettant de réaliser une thermocompression, comme décrit ci-dessus, le revêtement 16 est par exemple un polymère à base de silicone ou de polyuréthane résistant à des températures supérieures à 90°C, et de préférence supérieures à 130°C.

Dans tous les cas, le revêtement 16 est résistant à des températures supérieures aux températures de fonctionnement du moule.

Le revêtement 16 ne présente pas de mémoire de forme, c'est-à-dire qu'il reprend sa forme initiale après chaque compression. On garantit ainsi la permanence de forme de la surface de réception 6 pour chaque compression.

Le moule décrit ci-dessus est utilisé dans un procédé de revêtement d'un élément 10 par une couche de revêtement 12.

Au cours d'une étape préalable, l'élément rigide 10 est par exemple formé dans un premier moule de compression afin de lui conférer sa forme tridimensionnelle. Selon d'autres exemples, l'élément rigide 10 est formé par injection au moyen d'un moule d'injection ou encore par extrusion.

L'élément 10 est ensuite disposé sur la surface de réception 6 de la partie mâle 2 et une couche de revêtement 12 est disposée sur la surface de réception 8 de la partie femelle.

La partie mâle est rapprochée de la partie femelle afin d'exercer une pression sur l'élément 10 et la couche de revêtement 12 et de solidariser cet élément et cette couche, par compression ou par thermocompression.

La partie mâle est ensuite écartée de la partie femelle et la pièce finie est sortie du moule.

Un tel moule est particulièrement avantageux pour un élément 10 à base de fibres naturelles. En effet, le problème de la stabilité tridimensionnelle se pose particulièrement pour un tel élément. Ce problème est résolu par le revêtement 16, tel que décrit ci-dessus, ce qui permet de se passer d'une couche de mousse disposée entre l'élément et la couche de revêtement. La pièce obtenue conserve ainsi son toucher « dur » après son revêtement par la couche de revêtement. Les fibres naturelles sont par exemple du bois ou du lin ou autre ou un mélange de différentes fibres naturelles.

On comprendra également que le moule et le procédé peut s'appliquer à tout élément rigide présentant des problèmes de stabilité géométrique.

La couche de revêtement 12 est par exemple réalisée à base de cuir naturel, de textile non tissé ou tissé ou d'un matériau lignocelllulosique, telle qu'une feuille de bois ou un complexe lignocellulosique ou un revêtement comprenant une pluralité de couches à base de matériaux lignocellulosiques.

Le moule et le procédé décrits ci-dessus permettent d'obtenir une pièce finie tridimensionnelle, revêtue par une couche de revêtement directement appliquée contre l'élément revêtu et présentant un toucher « dur ». Le revêtement est réalisé de façon satisfaisante et la qualité de la pièce finie est garantie pour le moule décrit ci-dessus.

## Revendications

1. Moule de compression (1) de revêtement d'un élément (10) rigide par une couche de revêtement (12), le moule (1) comprenant une partie mâle (2) et une partie femelle (4) comprenant chacune une surface de réception (6, 8) respectivement dudit élément (10) et de la couche de revêtement (12), ladite surface (6, 8) présentant la forme dudit élément (10), une des parties étant déplaçable de sorte à appuyer contre l'élément (10) et la couche de revêtement (12) de sorte à solidariser ladite couche de revêtement (12) audit élément (10), **caractérisé en ce qu'**un revêtement (16) à base de résine est fixé à l'une des parties (2), ledit revêtement (16) étant destiné à compenser l'instabilité géométrique de l'élément (10) de sorte à appliquer une pression sensiblement uniforme sur ledit élément (10).

2. Moule de compression selon la revendication 1, **caractérisé en ce que** la partie mâle (2) est déplaçable vers la partie femelle (4), le revêtement (16) à base de résine étant fixé à ladite partie mâle (2).

3. Moule de compression selon la revendication 1 ou 2, **caractérisé en ce qu'**il comprend des moyens de chauffage d'au moins une des parties du moule (4) de sorte à solidariser la couche de revêtement (12) à l'élément (10) par thermocompression.

4. Moule de compression selon l'une quelconque des revendications 1 à 3, **caractérisé en ce que** le revêtement (16) à base de résine présente une dureté sensiblement comprise entre 60 shore A et 100 shore A.

5. Moule de compression selon l'une quelconque des revendications 1 à 4, **caractérisé en ce que** le revêtement à base de résine est un polymère à base de silicone ou de polyuréthane résistant à des températures supérieures ou égales à 30°C.

6. Moule de compression selon la revendication 5, **caractérisé en ce que** le revêtement (16) à base de résine est résistant à des températures supérieures ou égales à 90°C.

7. Moule de compression selon l'une quelconque des revendications 1 à 6, **caractérisé en ce que** le revêtement (16) à base de résine présente une épaisseur sensiblement comprise entre 1 mm et 10 mm.

8. Moule de compression selon l'une quelconque des revendications 1 à 7, **caractérisé en ce que** la partie (2) à laquelle est fixé le revêtement (16) à base de résine comprend des moyens de formation d'un vide (14) sur la surface de réception (6) de ladite partie (2) afin de retenir l'élément (10) contre ladite partie.

9. Procédé de revêtement d'un élément rigide (10) par compression, utilisant un moule de compression (1) selon l'une quelconque des revendications 1 à 7, ledit procédé comprenant les étapes suivantes :
- disposer une couche de revêtement (12) et l'élément (10), chacun sur une surface de réception (6, 8) du moule,
- déplacer la partie (2) déplaçable du moule de sorte que le revêtement (16) à base de résine appuie de façon uniforme contre l'élément (10) et la couche de revêtement (12) et l'autre partie (4) et solidarise la couche de revêtement (12) à l'élément (10),
- déplacer la partie déplaçable de sorte à l'écarter de l'autre partie et retirer l'élément (10) ainsi revêtu.

10. Procédé de revêtement selon la revendication 9, **caractérisé en ce que** la couche de revêtement (12) est une couche à base d'un matériau lignocellulosique, un complexe lignocellulosique ou un revêtement comprenant une pluralité de couches à base de matériaux lignocellulosiques.

11. Procédé de revêtement selon la revendication 9 ou 10, **caractérisé en ce que** l'élément (10) à revêtir est une pièce à base de fibres naturelles.

## Claims

1. Compression mould (1) for coating a rigid member (10) with a coating layer (12), the mould (1) comprising a male part (2) and a female part (4) each comprising a reception surface (6, 8) respectively of said member (10) and of the coating layer (12), said surface (6, 8) having the shape of said member (10), one of the parts being movable so as to bear against the member (10) and the coating layer (12) so as to bind said coating layer (12) to said member (10), **characterized in that** a resin-based coating (16) is attached to one of the parts (2), said coating (16) being intended to compensate for the geometrical instability of the member (10) so as to apply a substantially uniform pressure on said member (10).

2. Compression mould according to claim 1, **characterized in that** the male part (2) is movable towards the female part (4), the resin-based coating (16) being attached to said male part (2).

3. Compression mould according to claim 1 or 2, **characterized in that** it comprises means for heating at least one or the parts of the mould (4) so as to bind the coating layer (12) to the member (10) by thermocompression.

4. Compression mould according to any of claims 1 to 3, **characterized in that** the resin-based coating (16) has a hardness substantially comprised between 60 shore A and 100 shore A.

5. Compression mould according to any of claims 1 to 4, **characterized in that** the resin-based coating is a polymer based on silicon or on polyurethane withstanding temperatures greater than or equal to 30°C.

6. Compression mould according to claim 5, **characterized in that** the resin-based coating (16) withstands temperatures greater than or equal to 90°C.

7. Compression mould according to any of claims 1 to 6, **characterized in that** the resin-based coating (16) has a thickness substantially comprised between 1 mm and 10 mm.

8. Compression mould according to any of claims 1 to 7, **characterized in that** the part (2) to which the resin-based coating (16) is attached, comprises means for forming a vacuum (14) on the reception surface (6) of said part (2) in order to retain the member (10) against said part.

9. Method for coating a rigid member (10) by compression, using a compression mould (1) according to any of claims 1 to 7, said method comprising the following steps:
- positioning a coating layer (12) and the member (10), each on a reception surface (6, 8) of the mould,
- moving the movable part (2) of the mould so that the resin-based coating (16) uniformly bears against the member (10) and the coating layer (12) and the other part (4) and binds the coating layer (12) to the member (10),
- moving the movable part so as to move it away from the other part and removing the thereby coated member (10).

10. Coating method according to claim 9, **characterized in that** the coating layer (12) is a layer based on a lignocellulosic material, a lignocellulosic complex or a coating comprising a plurality of layers based on lignocellulosic materials.

11. Coating method according to claim 9 or 10, **characterized in that** the member (10) to be coated is a part based on natural fibres.

## Patentansprüche

1. Kompressionsform (1) zur Beschichtung eines starren Elements (10) mit einer Beschichtungsschicht (12), wobei die Form (1) ein Vaterteil (2) und ein Mutterteil (4) mit jeweils einer Aufnahmefläche (6, 8) besagten Elements (10) und der Beschichtungsschicht (12) beinhaltet, besagte Fläche (6, 8) die Form besagten Elements (10) aufweist, und eines der Teile so verschoben werden kann, dass es gegen das Element (10) und die Beschichtungsschicht (12) drückt, um besagte Beschichtungsschicht (12) mit besagtem Element (10) zu verbinden, **dadurch gekennzeichnet, dass** eine Beschichtung (16) auf Harzbasis an einem der Teile (2) angebracht wird, wobei besagte Beschichtung (16) dazu dient, die geometrisch Instabilität des Elements (10) auszugleichen, so dass ein annähernd gleichmäßiger Druck auf besagtes Element (10) ausgeübt wird

2. Kompressionsform nach Anspruch 1, **dadurch gekennzeichnet, dass** sich das Vaterteil (2) zum Mutterteil (4) hin verschieben lässt, wobei die Beschichtung (16) auf Harzbasis an besagtem Vaterteil (2) angebracht ist.

3. Kompressionsform nach Anspruch 1 oder 2, **dadurch gekennzeichnet, dass** es Heizmittel mindestens eines der Formteile (4) beinhaltet, so dass die Beschichtungsschicht (12) durch Thermokompression mit dem Element (10) verbunden wird.

4. Kompressionsform nach einem der Ansprüche 1 bis 3, **dadurch gekennzeichnet, dass** die Beschichtung (16) auf Harzbasis eine Härte ungefähr zwischen 60 Shore-A und 100 Shore-A aufweist.

5. Kompressionsform nach einem der Ansprüche 1 bis 4, **dadurch gekennzeichnet, dass** es sich bei der Beschichtung auf Harzbasis um ein Polymer auf Silikon- oder Polyurethanbasis handelt, das gegenüber Temperaturen größer oder gleich 30°C beständig ist.

6. Kompressionsform nach Anspruch 5, **dadurch gekennzeichnet, dass** die Beschichtung (16) auf Harzbasis gegenüber Temperaturen größer oder gleich 90°C beständig ist.

7. Kompressionsform nach einem der Ansprüche 1 bis 6, **dadurch gekennzeichnet, dass** die Beschichtung (16) auf Harzbasis eine Dicke ungefähr zwischen 1mm und 10mm aufweist.

8. Kompressionsform nach einem der Ansprüche 1 bis 7, **dadurch gekennzeichnet, dass** das Teil (2), an dem die Beschichtung (16) auf Harzbasis angebracht ist, Mittel zur Erzeugung eines Vakuums (14) an der Aufnahmefläche (6) besagten Teils (2) beinhaltet, um das Element (10) an besagtem Teil zu halten.

9. Verfahren zur Beschichtung eines starren Elements (10) durch Kompression unter Verwendung einer Kompressionsform (1) nach einem der Ansprüche 1 bis 7, wobei besagtes Verfahren folgende Schritte beinhaltet:
eine Beschichtungsschicht (12) und das Element (10) werden jeweils auf eine Aufnahmefläche (6, 8) der Form gelegt,
- das verschiebbare Teil (2) der Form wird derart verschoben, dass die Beschichtung (16) auf Harzbasis gleichmäßig gegen das Element (10) und die Beschichtungsschicht (12) und das andere Teil (4) drückt, und die Beschichtungsschicht (12) mit dem Element (10) verbindet,
- das verschiebbare Teil wird derart verschoben, dass ein Abstand zum anderen Teil entsteht, und das so beschichtete Element (10) wird entnommen.

10. Beschichtungsverfahren nach Anspruch 9, **dadurch gekennzeichnet, dass** es sich bei der Beschichtungsschicht (12) um eine Schicht auf der Grundlage eines Lignocellulosematerials, um einen Lignocellulosekomplex oder um eine Beschichtung handelt, die eine Vielzahl von Schichten auf der Grundlage von Lignocellulosematerialien beinhaltet.

11. Beschichtungsverfahren nach Anspruch 9 oder 10, **dadurch gekennzeichnet, dass** es sich bei dem zu beschichtenden Element (10) um ein Teil auf Naturfaserbasis handelt.
